# EUROPEAN PATENT SPECIFICATION

(11) **EP 3 027 044 B1**
(45) Date of publication and mention of the grant of the patent: **27.02.2019**
(21) Application number: 14752950.7
(22) Date of filing: 22.07.2014
(51) Int. Cl.: A23K 10/00, A23K 10/10, A23K 10/40, A23K 50/00

(54) **PROCESS FOR PREPARING FISH FEED PELLETS**
VERFAHREN ZUR HERSTELLUNG VON FISCHFUTTERPELLETS
PROCÉDÉ DE PRÉPARATION DE GRANULES D'ALIMENTS POUR POISSONS

(30) Priority: 23.07.2013 BE 201300508
(43) Date of publication of application: 08.06.2016
(73) Proprietor: Tereos Starch & Sweeteners Belgium, 9300 Aalst (BE)
(72) Inventor: FENEUIL, Aurélien, F-67390 Marckolsheim (FR); VOGEL, Fabrice, F-67390 Marckolsheim (FR); FLAMBEAU, Michel, F-67390 Marckolsheim (FR)
(74) Representative: Chielens, Kristof
(86) International application number: PCT/IB2014/063312
(87) International publication number: WO 2015/011644

(56) References cited:
- JP-A- H0 851 937
- "International Symposium on Fish Nutrition and Feeding 2014", , 8 April 2014 (2014-04-08), XP055150479, Retrieved from the Internet: URL:http://www.protix.eu/wp-content/upload s/2014/07/ISFNF14-Proceedings.pdf [retrieved on 2014-11-03]
- Q. ZHU ET AL: "Dietary glutamine supplementation improves tissue antioxidant status and serum non-specific immunity of juvenile Hybrid sturgeon (Acipenser schrenckii [female]?x?Huso dauricus[male])", JOURNAL OF APPLIED ICHTHYOLOGY, vol. 27, no. 2, 28 April 2011 (2011-04-28) , pages 715-720, XP055150531, ISSN: 0175-8659, DOI: 10.1111/j.1439-0426.2011.01676.x
- VAN DER BORGHT A ET AL: "Fractionation of wheat and wheat flour into starch and gluten: overview of the main processes and the factors involved", JOURNAL OF CEREAL SCIENCE, ACADEMIC PRESS LTD, GB, vol. 41, no. 3, May 2005 (2005-05), pages 221-237, XP004807409, ISSN: 0733-5210, DOI: 10.1016/J.JCS.2004.09.008
- VUKASIN DRAGANOVIC: "Towards Sustainable Fish Feed Production Using Novel Protein Sources", , [Online] 22 October 2013 (2013-10-22), XP055109165, Retrieved from the Internet: URL:http://edepot.wur.nl/277586> [retrieved on 2014-10-31]
- VUKASIN DRAGANOVIC ET AL: "Assessment of the effects of fish meal, wheat gluten, soy protein concentrate and feed moisture on extruder system parameters and the technical quality of fish feed", ANIMAL FEED SCIENCE AND TECHNOLOGY, ELSEVIER, AMSTERDAM, NL, vol. 165, no. 3, 4 March 2011 (2011-03-04) , pages 238-250, XP028480786, ISSN: 0377-8401, DOI: 10.1016/J.ANIFEEDSCI.2011.03.004 [retrieved on 2011-03-11]
- V. DRAGANOVIC ET AL: "Wheat gluten in extruded fish feed: effects on morphology and on physical and functional properties", AQUACULTURE NUTRITION, vol. 19, no. 6, 19 January 2013 (2013-01-19), pages 845-859, XP055108816, ISSN: 1353-5773, DOI: 10.1111/anu.12029
- EMMANUELLE APPER-BOSSARD ET AL: "Use of vital wheat gluten in aquaculture feeds", AQUATIC BIOSYSTEMS, BIOMED CENTRAL LTD, LONDON, UK, vol. 9, no. 1, 16 November 2013 (2013-11-16), page 21, XP021168945, ISSN: 2046-9063, DOI: 10.1186/2046-9063-9-21

## Description

As a result of the growing demand for fish from consumers around the world, wild catch is unable to sustain the demand and in response an aquaculture industry is developing rapidly. In the meantime, fish meal and fish oil from unconsumed wild catch have become insufficient as the sole feed source for fish such as salmon, trout, shrimps, sea bass or sea bream, to mention only some species.

During the last decennia, fish feed formulations containing vegetable proteins and oils, as supplements for fish meal and fish oil, were continuously developed. The most popular vegetable protein sources encountered as fish meal substitutes in these formulations were selected among soybean meal, soy protein concentrate, corn gluten, pea protein and vital wheat gluten.

These modern fish feed diets are most often prepared in the form of pellets. These pellets are made by first grinding and mixing together ingredients such as fish meal, vegetable proteins, and binding agents such as wheat flour. Then water is added and the resulting paste is extruded whereby the pellets obtained have dimensions which are controlled by the die of the extruder. These pellets are then dried and oils are added. Adjusting parameters such as temperature and pressure, enables the manufacturers to make pellets that suit different fish farming methods, for example feeds that float or slowly sink.

Among the vegetable proteins used as fish meal substitutes, vital wheat gluten is considered as a valuable source of protein and as a pellet binder. In a study made by Storebakken et al., published in Aquaculture (2000) p. 115-132, it was shown that vital wheat gluten supported rapid growth and was highly digestible, did not reduce digestibility of fat or energy or availability of essential elements in Atlantic salmon. Thereby up to 50% of crude protein of fish meal was replaced with crude protein from wheat gluten. The study also showed that vital wheat gluten, at a level up to 35% of dietary protein, caused no pathological changes in the intestinal epithelium.

In a more recent study by S. Helland and Grisdale-Helland B., published in Aquaculture (2006) vol. 261, 4, p.1363-1370, fish meal replacement by wheat gluten, in diets for Atlantic halibut was possible even at a high inclusion level of 20% of the diets. A further increase to 30% was also possible when supplementing the diet with lysine.

The effect of wheat gluten incorporation on pellet morphology and physical and functional properties was studied by Draganovic et al. and reported in Aquaculture Nutrition Volume 19, issue 6, pages 845-859, dec. 2013. The inclusion of vital wheat gluten in fish feed pellets, under the conditions used during these experiments, showed a reduction in oil impregnation and oil uptake during coating but yielded strong, highly porous pellets.

Storebakken et al. discloses gluten-comprising experimental fish feed compositions (International Symposium on fish Nutrition and Feeding ISNF symposium proceedings, p. 243, April 2014). The disclosed compositions comprise vital gluten, hydrolyzed wheat gluten or a combination thereof in a ratio of 1:1.

JPH0851937 discloses a shrimp feed composition that is crushed into crumbles. The JPH0851937 composition comprises vital wheat gluten in an amount of 5 wt.% and a vegetable protein hydrolysate containing a peptide as a main component in a ratio of 10:1.

Zhu et al. discloses fish feed compositions comprising wheat flour and wheat protein hydrolysate that enhance the antioxidant status and non-specific immunity of juvenile hybrid sturgeon (Journal of applied ichthyology; v. 27, n°2; April 2008). The ratio between gluten and protein hydrolysate according to Zhu et al. ranges from 0.19:1 to 0.19:5.

Dragonovic et al. discloses feed pellet compositions comprising fish meal, wheat gluten and a soy protein concentrate. Draganovic teaches that soy protein concentrate can replace fish meal, however high levels of wheat gluten is not a good alternative to fish meal (Wageningen University thesis, ISBN 9789461736802 - pp.25-41, 2013. Also published in Animal feed science and technology, vol. 165, n°3, march 2011).

The effects of ingredient composition and processing conditions on the physical qualities of extruded high energy fish feed were reviewed by Sorensen M. in Aquaculture Nutrition (2012) 18/3, p. 233-248. In the conclusions of this article it is stated that the production of pellets with predictable quality is, however, challenging because physical quality of the pellet is the result of the interaction between a broad range of processing conditions and the different ingredients. Among this broad range of processing conditions, energy input is one. This energy input is composed of two fractions: thermal energy which represents approximately 2/3 and mechanical energy which represents about 1/3 of that energy. This mechanical energy, reported as specific mechanical energy (SME) is generated by friction caused by the dough in the extruder barrel, as it is moved forward by the rotating screw.

In the process of manufacturing fish feed pellets, reduction of energy consumption and increase of production capacity, without affecting the quality of the material produced, are both improvements which are desirable from an economical and technical point of view. At the same time pellet properties such as durability, hardness, expansion, fat absorption and water stability should remain optimal, in order not to affect negatively feed intake and digestion.
Thereby, pellet hardness and durability will determine storage and transportation stability of the pellet, while expansion and fat absorption will have an effect on sinking velocity. In the case of salmonids, the commercial grow-out diets typically contain up to 400g fat per kg of feed. From literature it is not always clear to what extent pellet hardness affects digestibility: it was mentioned in literature (Pillay & Kutty, 2005, Feed and nutrition. In: Aquaculture: Principles and Practices, 2nd edn. Pp.105-173, Blackwell Publishing) that too hard pellets may cause digestive disturbances. Thereby it is known that pellet hardness increases with the incorporation of plant ingredients. (M. Sorensen, Aquaculture Nutrition, 2012). In this publication, already cited earlier, values ranging between 40 and 80N are mentioned. Therefore, controlling hardness might be an advantage, when other properties are not changing too much.

During extensive experimental work by the applicant, related to the substitution of other vegetable proteins by wheat gluten in fish feed compositions it has now been surprisingly observed that replacing these vegetable proteins by wheat gluten proteins in such formulations has a positive impact on energy consumption during the extrusion step, thereby resulting in an increased throughput even in composition containing a low content of fish meal (less than or equal to 10% of the total formulation). The applicant has further observed that pellet hardness could be controlled by combining the wheat gluten with a limited quantity of protein hydrolysate without seriously affecting durability, fat absorption and drying time of the pellets, in a negative way.

As a result the invention can then be formulated as to provide fish feed pellets containing fish meal, characterized in that the pellets comprise a protein hydrolysate and wheat gluten preferably, vital wheat gluten in a ratio wheat gluten: protein hydrolysate of 5: 1 to 20:1, wherein the wheat gluten content in the pellet (preferably the vital wheat gluten content) varies between 15 and 35% w/w of the pellet. Preferably, the pellet referred to is the one already coated with oil or fat. Preferably, the fish feed pellet of the invention comprises less than 60, 50, 20 or 10% fish meal preferably between 1 to 10% of fish meal.

As used herein, the term "fish feed pellet" refers to a composition of fish feed that has been subjected to a heat treatment, such as a steam treatment, and extruded through a machine. The fish feed pellet generally contains at least a protein fraction, a binder, a lipid fraction and optionally, minerals and/or vitamins. Fish feed pellet is commonly made by extruding the protein raw materials, the binder and optionally the minerals and/or the vitamins to which water is added. Lipids can be added before extrusion but are commonly added into the porous pellets formed by extrusion (for example by coating). According to the invention, the lipid fraction may be vegetable or animal oil or fat such as soy oil, corn oil, palm oil, castor bean oil, maize germ oil or fish oil. The protein fraction comprises mainly fish meal and vegetable proteins. Indeed, the fish feed pellet may be coated or non-coated typically by vegetable or animal oil or fat. According to the invention, protein fraction comprises a protein hydrolysate and gluten preferably wheat gluten more preferably vital wheat gluten. The term "wheat gluten" means the protein fraction insoluble in water extracted from wheat flour wet and then dried. The wheat gluten principally comprises the Gliadins and the Glutenins. The wheat gluten is preferably vital wheat gluten which is the native form of gluten. The vital gluten has viscoelastic properties due to interaction between Gliadins and Glutenins in the presence of water. Preferably, the wheat gluten is a mixture of vital gluten and modified wheat gluten. The modification of gluten may be denaturation (eg. thermal, acid or enzymatic solubilization) of vital wheat gluten. Typically, the wheat gluten content varies between 8 to 39 wt% of the pellet, preferably, between 10 to 38, 12 to 37, 14 to 36, 15 to 35, 16 to 34, 17 to 25, or 18 to 24 wt. % of the pellet. For example, the wheat gluten content varies between 15 to 35 or 15 to 25 wt. % of the pellet.
The binder is usually in the form of a starch-containing raw material, such as wheat flour, potato flour, rice, rice flour, pea flour, beans or tapioca flour, to give the feed the desired strength and form stability.
Preferably, said fish feed pellet comprises 30 to 70% by weight of protein, 5 to 20% by wt of binder and, 10 to 50% of lipid. According to the invention the fish feed pellet size is between 0.5 to 30 mm depending on the age and type of fish.
Thereby the wheat gluten proteins replace vegetable proteins selected among soy protein concentrate, soybean meal, corn gluten meal, pea protein concentrate, potato protein or other available protein sources such as lupin seed meal, cotton seed meal, linseed meal or sunflower meal in part or as a whole. This list is not to be considered as limiting, but merely as an illustration.

The vegetable protein hydrolysate may be from soy protein, soybean protein, corn protein, pea protein, potato protein, lupin protein, cotton protein, linseed protein or sunflower protein and/or a mix thereof. Among those vegetable protein hydrolysates, wheat protein hydrolysates are the most preferred. The protein hydrolysates can be obtained by means of standard chemical or enzymatic processes, which are well illustrated in the prior art. Typically, protein hydrolysates are purified protein hydrolysates.

The pellets are further characterized in that they have a hardness of less than 40N, preferably less than 35, 30, 25N, in combination with a Pellet durability Index (PDI) of greater than 94, preferably greater than 95, 96, 97, 98 or 99.
Hardness was analysed by diametrical compression using a Schleuninger tablet tester described in the literature by *van der* Poel in: Physical quality of pelleted animal feed: 1. Criteria for pellet quality (1996*).* PDI was determined by means of the Holmen Pellet Tester NHP100, as described on http://www.tekpro.com/holmen-portable-nhp100.html. Thereby the analysis was done over a period of 60 sec.

Controlled hardness, in combination with low dust formation (high PDI) is advantageous with regard to feed uptake and digestibility of the fish feed pellet. At the same time expansion ratios between 20 and 30% were realized, thereby providing a good quality sinking pellet.

In a preferred embodiment, the ratio wheat gluten: protein hydrolysate varies from 8:1 to 14:1, more preferably from 9:1 to 12:1. The wheat gluten protein content in the pellet preferably varies between 15 and 25% w/w of the pellet, more preferably between 18 and 22% w/w of the pellet.

The invention also concerns a process for preparing fish feed pellets or a process for reducing the Specific Mechanical Energy (SME) in the extrusion plant for the preparation of fish feed pellets wherein said method comprises the following steps:
- grinding and/or mixing of wheat gluten, fish meal and vegetable protein hydrolysate, wherein the ratio of wheat gluten: vegetable protein hydrolysate is between 5:1 - 20:1;
- adding water and homogenizing the obtained mixture until a paste with a moisture content of 28-32 % is formed;
- extruding the paste obtained by an extrusion installation comprising a mold and a number of mixing and kneading zones, composed of a plurality of alternately forward and backward kneading screw elements, wherein the temperature in the extrusion plant is increased from 50°C at the inlet to 150°C in the final kneading zone to the die;
- cutting of the extruded material exiting the die, into porous pellets of a suitable length;
- drying of the porous pellets to a moisture content of 6 to 10%;
- absorbing of a preheated vegetable or animal oil or fat in the porous pellet under vacuum, and
- cooling of the pellets thus obtained at room temperature.

According to the invention, the use of a combination of a vegetable protein hydrolysate and wheat gluten in a composition of fish feed pellets preferably in a ratio wheat gluten: protein hydrolysate of 5:1 to 20:1, provides the reduction of SME in a process of preparing said fish feed pellets.

Grinding of the different ingredients is performed in any suitable mill such as, e.g. a pin mill, a roller mill, a turbo mill or a hammer mill, a hammer mill being preferred.

The water added during the preparation of the paste has a temperature of between 10 and 30°C, preferably, no additional steam was used.

According to the invention "SME" or "specific mechanical energy" represents the energy transferred from the main drive motor of the extruder through frictional heating for melting, mixing and die pressurization in the compounding process. The SME will thus vary, depending on the screw used (high shear or low shear screw) and the composition processed (resistance of the composition to the rotation of the screw). The calculation of SME is performed using the extruder motor load (e.g. shaft torque), screw speed and total throughput to provide energy input on a unit mass basis. Typically, the SME value is calculated using the formula disclosed by Levine in Cereal Foods World, 1997, p.22 and recalculated from kWh/kg into kJ/kg. Indeed, the reduction of the SME value reflects a reduction of energy consumption during processing or the opportunity to increase production capacity with identical energy consumption.

During the processing of the compositions disclosed above it has been surprisingly observed that the throughput of the extruder was increased by at least 17%, preferably at 25%, and more preferably by at least 30%, as the result of the use of the wheat gluten: protein hydrolysate combinations as claimed. Thereby a formulation containing 10% wheat gluten was taken as the reference (see reference example 1).

Thus, the invention further concerns a process for improving the production of a fish feed pellet, said process comprising the step of adding to the composition of said fish feed pellets a combination of a vegetable protein hydrolysate and wheat gluten, in a ratio wheat gluten: protein hydrolysate of 5:1 to 20:1 and the step of extruding said composition and thereby improving the throughput of the extruder.

Hereafter the invention will be illustrated by means of a number of examples. These examples are to be considered as an illustration of the invention and should not be considered as limiting the scope of the invention.

### Examples

All experiments were performed on a ZSK 25-type twin screw extruder from Coperion using a screw configuration composed of a number of elements. The screw speed was set at 130 rpm and the six compartments of the barrel were heated respectively, starting from the inlet, at 50°C, 70°C, 90°C, 120°C, 150°C and 150°C. When necessary, the different ingredients were milled using a hammer mill, to provide a fine powder. Then all ingredients were mixed and homogenized together with water in order to obtain a paste containing 30% moisture.
This paste is then extruded under the conditions mentioned before. The expanded pellets thus obtained are then dried to a moisture content of about 9%, before the coating step.
The coating with oil is then performed in a pellet vacuum coater (PG-10VC, Dinissen BV, Sevenum, the Netherlands), using vacuum conditions of 0.2 bar, and a heated oil at 60°C. Thereby pellets having an oil content of 30.6 -31% w/w on the pellet are prepared.

Following reference compositions and compositions according to the invention were used for preparing fish feed pellets;

### Reference examples 1-3:

Reference formulations contain no protein hydrolysate, be it wheat based or originating from another source.

**Table 1: Reference formulations containing 10, 20 and 30% vital wheat gluten (VWG) on commercial product**

| ***Ingredients*** | ***10% VWG (1) (% CP)*** | ***20% VWG (2) (% CP)*** | ***30% VWG (3) (% CP)*** |
|---|---|---|---|
| Vital wheat gluten | 10,0 | 20,0 | 30,0 |
| Whole wheat flour | 11,4 | 11,1 | 11,0 |
| Soybean oil | 30,9 | 30,8 | 31,0 |
| Dicalcium phosphate | 2,0 | 2,0 | 2,0 |
| Pea protein concentrate | 6,1 | 2,0 | 0,0 |
| Soy protein concentrate | 24,0 | 18,2 | 10,3 |
| Corn gluten | 5,2 | 5,3 | 5,2 |
| Fish meal | 10,4 | 10,6 | 10,5 |

Pellets prepared, using these compositions of table 1, using the processing conditions disclosed above, did show the following properties:

**Table 2: Hardness and PDI of reference pellets containing 10, 20 and 30% wheat gluten on commercial product.**

| | ***10% VWG (1)*** | ***20% VWG (2)*** | ***30% VWG (3)*** |
|---|---|---|---|
| Hardness (N) | 35 | 48 | 40 |
| PDI (%) | 97 | 98 | 98 |

Table 2 clearly shows that the physical characteristics of the pellets such as hardness and PDI are not altered by the addition of vital gluten.
The SME-values for the reference examples 1-3 were respectively 189, 167 and 142kJ/kg.

### Examples 4-7:

The following formulations, according to the invention, contain vital wheat gluten in combination with a vegetable protein hydrolysate. Thereby VWG stands for vital wheat gluten, HWG stands for hydrolysed wheat gluten, and HSP stands for hydrolysed soy protein. The hydrolysed wheat gluten protein used is SOLPRO 508, commercialised by TEREOS SYRAL and the hydrolysed soy protein is ESTRIL 75, from SOPROPECHE.

**Table 3: Pellet compositions according to the invention, ingredients being expressed as % on commercial product**

| ***Ingredients*** | ***18*/*2 VWG:HWG*** | ***18*/*2 VWG:HSP*** | ***19*/*1 VWG:HWG*** | ***27*/*3 VWG:HWG*** |
|---|---|---|---|---|
| Vital wheat gluten | 18,0 | 18,0 | 19,0 | 27,0 |
| Whole wheat flour | 11,0 | 11,0 | 11,0 | 10,3 |
| Soybean oil | 31,0 | 31,0 | 31,0 | 31,1 |
| Dicalcium phosphate | 2,0 | 2,0 | 2,0 | 2,1 |
| Pea protein concentrate | 2,1 | 2,1 | 2,1 | 0,0 |
| Soy protein concentrate | 18,1 | 18,1 | 18,1 | 10,3 |
| Corn gluten | 5,3 | 5,3 | 5,3 | 5,3 |
| Fish meal | 10,5 | 10,5 | 10,5 | 10,8 |
| Protein hydrolysate (HWG or HSP) | 2,0 | 2,0 | 1,0 | 3,0 |

Pellets prepared, using these compositions of table 3, using the processing conditions disclosed above, did show the following properties:

**Table 4: hardness and PDI of pellets according to the invention**

| | ***18*/*2 WG:HWG*** | ***18*/*2 WG:HSP*** | ***19*/*1 WG:HWG*** | ***27*/*3 WG:HWG*** |
|---|---|---|---|---|
| Hardness (N) | 38 | 32 | 31 | 35 |
| PDI | 97,5 | 96,6 | 97,2 | 97 |

The SME-values for the examples 4-7, according to the invention were respectively 160, 164, 160 and 128 kJ/kg.

It is clear from the above that the incorporation of hydrolysed vegetable proteins results in comparable hardness and PDI values versus a reference formulation containing 10% VWG, when increasing gluten content.

Other properties, such as bulk density (of coated pellets), OAC (oil absorption capacity) and sinking velocity are represented in the following table. Thereby these values are compared with those of a reference formulation containing 10% VWG (reference example 1).
The OAC is in fact the "maximum oil infusion" into pellets as disclosed in V. Draganovic et al. in Aquaculture Nutrition (2012) DOI: 10.1111/anu.12029*.* Sinking velocity is determined according to the method disclosed in Aquaculture Nutrition (2012) vol. 18, p.233-248*.*

**Table 5**

| | ***10% WG*** | ***18*/*2 WG:HWG*** | ***18*/*2 WG:HSP*** | ***19*/*1 WG:HWG*** | ***27*/*3 WG:HWG*** |
|---|---|---|---|---|---|
| Bulk density(g/l) | 604 | 597 | 598 | 601 | 606 |
| OAC | 41,8 | 40,2 | 43,6 | 43,5 | 42,9 |
| Sinking velocity cm/s) | 8,5 | 6,2 | ND | ND | ND |

The table 5 clearly confirms that the principal physicochemical characteristics of the pellets are maintained although their SME are clearly reduced by the addition of vegetable protein hydrolysate and vital gluten has here above mentioned.

## Claims

1. A fish feed pellet comprising fish meal, **characterized in that** said pellet comprises a vegetable protein hydrolysate and wheat gluten, wherein the wheat gluten content varies between 8 and 39 wt.% of the pellet, in a ratio of wheat gluten: vegetable protein hydrolysate of 5:1 - 20:1.

2. Fish feed pellet according to claim 1, wherein said fish feed pellet comprises less than 60, 50, 20 or 10 wt. % fish meal.

3. Fish feed pellet according to claim 1 or 2, wherein said fish feed pellet comprises less than or equal to 10 wt. % fish meal, preferably between 1 to 10 wt. % of fish meal.

4. Fish feed pellet according to any one of the preceding claims, wherein the wheat gluten is vital wheat gluten.

5. Fish feed pellet according to any one of the preceding claims, wherein the ratio of wheat gluten: vegetable protein hydrolysate ranges from 8:1-14:1.

6. Fish feed pellet according to any one of the preceding claims, wherein the wheat gluten content varies between 10 and 38 wt. % of the pellet preferably 15 to 35 wt % of the pellet.

7. Fish feed pellet according to any one of the preceding claims, wherein the vegetable protein hydrolysate is selected from soy protein, soybean protein, corn protein, pea protein, potato protein, lupin protein, cotton protein, linseed protein, sunflower proteins and/or a mix thereof.

8. Fish feed pellet according to any one of the preceding claims, wherein the pellets have a hardness of less than 40N, and a Pellet Durability Index (PDI) of greater than 94.

9. A process for preparing fish feed pellets according to any one of claims 1 to 8, **characterized in that** said method comprises the following steps:
- grinding and/or mixing of wheat gluten, fish meal and vegetable protein hydrolysate into a powder mixture;
- adding water and homogenizing the obtained mixture until a paste with a moisture content of 28-32 % is formed;
- extruding the paste obtained by an extrusion installation comprising a mold and a number of mixing and kneading zones, composed of a plurality of alternately forward and backward kneading screw elements, wherein the temperature in the extrusion plant is increased from 50°C at the inlet to 150°C in the final kneading zone to the die;
- cutting of the extruded material exits the die, into porous pellets of a suitable length;
- drying of the porous pellets to a moisture content of 6 to 10%;
- absorbing for heated vegetable or animal oil or fat in the porous pellet under vacuum, and
- cooling of the pellets thus obtained at room temperature.

10. A process for reducing the Specific Mechanical Energy (SME) in the extrusion plant for the preparation of fish feed pellets wherein said method comprises the following steps:
- grinding and/or mixing of wheat gluten, fish meal and vegetable protein hydrolysate, wherein the ratio of wheat gluten: vegetable protein hydrolysate is between 5:1 - 20:1;
- adding water and homogenizing the obtained mixture until a paste with a moisture content of 28-32 % is formed;
- extruding the paste obtained by an extrusion installation comprising a mold and a number of mixing and kneading zones, composed of a plurality of alternately forward and backward kneading screw elements, wherein the temperature in the extrusion plant is increased from 50°C at the inlet to 150°C in the final kneading zone to the die;
- cutting of the extruded material exiting the die, into porous pellets of a suitable length;
- drying of the porous pellets to a moisture content of 6 to 10%;
- absorbing of a preheated vegetable or animal oil or fat in the porous pellet under vacuum, and
- cooling of the pellets thus obtained at room temperature.

11. The process according to claim 9 or 10, wherein the temperature of the added water is 10°C to 30°C.

12. A process for improving the production of a fish feed pellet, said process comprising the step of adding to the composition of said fish feed pellets a combination of a vegetable protein hydrolysate and wheat gluten, in a ratio wheat gluten: protein hydrolysate of 5: 1 to 20:1 and the step of extruding said composition.

## Patentansprüche

1. Fischfutterpellet, umfassend Fischmehl, **dadurch gekennzeichnet, dass** das Pellet ein Pflanzenproteinhydrolysat und Weizengluten, wobei das Weizengluten Gehalt zwischen 8 und 39 Gew.-% des Pellets, variiert mit einem Verhältnis von Weizengluten:Pflanzenproteinhydrolysat von 5:1 bis 20:1 umfasst.

2. Fischfutterpellet nach Anspruch 1, wobei das Fischfutterpellet weniger als 60, 50, 20 oder 10 Gew.-% Fischmehl umfasst.

3. Fischfutterpellet nach Anspruch 1 oder 2, wobei das Fischfutterpellet weniger als oder gleich 10 Gew.-% Fischmehl, vorzugsweise zwischen 1 und 10 Gew.-% Fischmehl, umfasst.

4. Fischfutterpellet nach einem der vorhergehenden Ansprüche, wobei das Weizengluten vitales Weizengluten ist.

5. Fischfutterpellet nach einem der vorhergehenden Ansprüche, wobei das Verhältnis von Weizengluten:Pflanzenproteinhydrolysat im Bereich von 8:1 bis 14:1 liegt.

6. Fischfutterpellet nach einem der vorhergehenden Ansprüche, wobei der Weizenglutengehalt zwischen 10 und 38 Gew.-% des Pellets, vorzugsweise 15 bis 35 Gew.-% des Pellets, variiert.

7. Fischfutterpellet nach einem der vorhergehenden Ansprüche, wobei das Pflanzenproteinhydrolysat aus Sojaprotein, Sojabohnenprotein, Maisprotein, Erbsenprotein, Kartoffelprotein, Lupinenprotein, Baumwollprotein, Leinsamenprotein, Sonnenblumenproteinen und/oder einer Mischung davon ausgewählt ist.

8. Fischfutterpellet nach einem der vorhergehenden Ansprüche, wobei die Pellets eine Härte von weniger als 40 N und einen Pellethaltbarkeitsindex (Pellet Durability Index, PDI) von größer als 94 aufweisen.

9. Verfahren zur Herstellung von Fischfutterpellets nach einem der Ansprüche 1 bis 8, **dadurch gekennzeichnet, dass** das Verfahren die folgenden Schritte umfasst:
- Mahlen und/oder Mischen von Weizengluten, Fischmehl und Pflanzenproteinhydrolysat zu einer Pulvermischung;
- Zugeben von Wasser und Homogenisieren der erhaltenen Mischung, bis eine Paste mit einem Feuchtigkeitsgehalt von 28 bis 32 % gebildet ist;
- Extrudieren der erhaltenen Paste durch eine Extrusionsanlage, umfassend eine Form und eine Anzahl von Misch- und Knetzonen, die aus einer Vielzahl von abwechselnd vorwärts und rückwärts knetenden Schneckenelementen bestehen, wobei die Temperatur in der Extrusionsanlage von 50 °C am Einlass auf 150 °C in der letzten Knetzone zu der Düse erhöht wird;
- Schneiden des extrudierten Materials tritt aus der Düse aus, zu porösen Pellets geeigneter Länge;
- Trocknen der porösen Pellets bis auf einen Feuchtigkeitsgehalt von 6 bis 10 %;
- Absorbieren des erhitzten pflanzlichen oder tierischen Öls oder Fetts in dem porösen Pellet unter Vakuum und
- Kühlen der so erhaltenen Pellets bei Raumtemperatur.

10. Verfahren zur Verringerung der spezifischen mechanischen Energie (SME) in der Extrusionsanlage zur Herstellung von Fischfutterpellets, wobei das Verfahren die folgenden Schritte umfasst:
- Mahlen und/oder Mischen von Weizengluten, Fischmehl und Pflanzenproteinhydrolysat, wobei das Verhältnis von Weizengluten:Pflanzenproteinhydrolysat zwischen 5:1 und 20:1 liegt;
- Zugeben von Wasser und Homogenisieren der erhaltenen Mischung, bis eine Paste mit einem Feuchtigkeitsgehalt von 28 bis 32 % gebildet ist;
- Extrudieren der erhaltenen Paste durch eine Extrusionsanlage, umfassend eine Form und eine Anzahl von Misch- und Knetzonen, die aus einer Vielzahl von abwechselnd vorwärts und rückwärts knetenden Schneckenelementen bestehen, wobei die Temperatur in der Extrusionsanlage von 50 °C am Einlass auf 150 °C in der letzten Knetzone vor der Düse erhöht wird;
- Schneiden des extrudierten Materials, das aus der Düse austritt, zu porösen Pellets geeigneter Länge;
- Trocknen der porösen Pellets bis auf einen Feuchtigkeitsgehalt von 6 bis 10 %;
- Absorbieren eines vorab erhitzten pflanzlichen oder tierischen Öls oder Fetts in dem porösen Pellet unter Vakuum und
- Kühlen der so erhaltenen Pellets bei Raumtemperatur.

11. Verfahren nach Anspruch 9 oder 10, wobei die Temperatur des zugegebenen Wassers 10 °C bis 30 °C beträgt.

12. Verfahren zum Verbessern der Herstellung eines Fischfutterpellets, wobei das Verfahren den Schritt des Zugebens einer Kombination aus einem Pflanzenproteinhydrolysat und Weizengluten in einem Verhältnis von Weizengluten:Proteinhydrolysat von 5:1 bis 20:1 zu der Zusammensetzung der Fischfutterpellets und den Schritt des Extrudierens der Zusammensetzung umfasst.

## Revendications

1. Pellet d'aliment pour poisson comprenant de la farine de poisson, **caractérisé en ce que** ledit pellet comprend un hydrolysat de protéine végétale et du gluten de blé, **en ce que** la teneur de gluten de blé varie entre 8 et 39% en poids du pellet, selon un rapport du gluten de blé à l'hydrolysat de protéine végétale de 5:1-20:1.

2. Pellet d'aliment pour poisson selon la revendication 1, **caractérisé en ce que** ledit pellet d'aliment pour poisson comprend moins de 60, 50, 20 ou 10% en poids de farine de poisson.

3. Pellet d'aliment pour poisson selon la revendication 1 ou 2, **caractérisé en ce que** ledit pellet d'aliment pour poisson comprend une quantité inférieure ou égale à 10% en poids de farine de poisson, préférablement de 1 à 10% en poids de farine de poisson.

4. Pellet d'aliment pour poisson selon l'une quelconque des revendications précédentes, **caractérisé en ce que** le gluten de blé est du gluten vital de blé.

5. Pellet d'aliment pour poisson selon l'une quelconque des revendications précédentes, **caractérisé en ce que** le rapport du gluten de blé à l'hydrolysat de protéine végétale de 8:1-14:1.

6. Pellet d'aliment pour poisson selon l'une quelconque des revendications précédentes, **caractérisé en ce que** la teneur en gluten de blé varie entre 10 et 38% en poids du pellet, préférablement entre 15 et 35% en poids du pellet.

7. Pellet d'aliment pour poisson selon l'une quelconque des revendications précédentes, **caractérisé en ce que** l'hydrolysat de protéine végétale est choisi parmi les protéines de soja, les protéines de soya, les protéines de maïs, les protéines de pois, les protéines de pomme de terre, les protéines de lupin, les protéines de coton, les protéines de lin, les protéines de tournesol et/ou un mélange de celles-ci.

8. Pellet d'aliment pour poisson selon l'une quelconque des revendications précédentes, **caractérisé en ce que** les pellets possèdent une dureté inférieure à 40 N, et un Indice de Durabilité de Pellet (PDI) supérieur à 94.

9. Procédé de préparation de pellets d'aliment pour poisson selon l'une quelconque des revendications 1 à 8, **caractérisé en ce que** ladite méthode comprend les étapes suivantes :
- le broyage et/ou le mélange de gluten de blé, de farine de poisson et d'hydrolysat de protéine végétale en un mélange pulvérulent ;
- l'addition d'eau et une homogénéisation du mélange obtenu jusqu'à la formation d'une pâte ayant une teneur en humidité de 28-32% ;
- l'extrusion de la pâte obtenue par une installation d'extrusion comprenant un moule et un certain nombre de zones de mélange et de malaxage, composées d'une pluralité d'éléments de vis de malaxage en va-et-vient, où la température dans l'installation d'extrusion augmente de 50°C au niveau de l'entrée jusqu'à 150°C dans la zone finale de malaxage vers la filière ;
- le découpage du matériau extrudé sort de la filière, en pellets poreux d'une longueur convenable ;
- le séchage des pellets poreux jusqu'à une teneur en humidité allant de 6 à 10% ;
- l'absorption d'huile ou de matière grasse animale ou végétale chauffée dans les pellets poreux sous vide ; et
- le refroidissement des pellets ainsi obtenus jusqu'à température ambiante.

10. Procédé de réduction de l'Energie Mécanique Spécifique (SME) dans l'installation d'extrusion pour la préparation de pellets d'aliment pour poisson, dans laquelle ladite méthode comprend les étapes suivantes :
- le broyage et/ou le mélange de gluten de blé, de farine de poisson et d'hydrolysat de protéine végétale, où le rapport du gluten de blé à l'hydrolysat de protéine végétale est de 5:1-20:1 ;
- l'addition d'eau et une homogénéisation du mélange obtenu jusqu'à la formation d'une pâte ayant une teneur en humidité de 28-32% ;
- l'extrusion de la pâte obtenue par une installation d'extrusion comprenant un moule et un certain nombre de zones de mélange et de malaxage, composées d'une pluralité d'éléments de vis de malaxage en va-et-vient, où la température dans l'installation d'extrusion augmente de 50°C au niveau de l'entrée jusqu'à 150°C dans la zone finale de malaxage vers la filière ;
- le découpage du matériau extrudé sortant de la filière, en pellets poreux d'une longueur convenable ;
- le séchage des pellets poreux jusqu'à une teneur en humidité allant de 6 à 10% ;
- l'absorption d'une huile ou de matière grasse animale ou végétale préchauffée dans les pellets poreux sous vide ; et
- le refroidissement des pellets ainsi obtenus jusqu'à température ambiante.

11. Procédé selon la revendication 9 ou 10, dans lequel la température de l'eau ajoutée va de 10°C à 30°C.

12. Procédé d'amélioration de la production d'un pellet d'aliment pour poisson, ledit procédé comprenant l'étape consistant à ajouter, à la composition desdits pellets d'aliment pour poisson, une combinaison d'un hydrolysat de protéine végétale et de gluten de blé, selon un rapport du gluten de blé à l'hydrolysat de protéine végétale de 5:1-20:1, et l'étape consistant à extruder ladite composition.
